# FASCICULE DE BREVET EUROPEEN

(11) **EP 1 316 675 B1**
(45) Date de publication et mention de la délivrance du brevet: **22.09.2004**
(21) Numéro de dépôt: 02292774.3
(22) Date de dépôt: 07.11.2002
(51) Int. Cl.: F01D 5/08, F01D 11/00

(54) **Stator pour turbomachine**
Stator für eine Turbomaschine
Stator for a turbomachine

(43) Date de publication de la demande: 04.06.2003
(73) Titulaire: SNECMA MOTEURS, 75015 Paris (FR)
(72) Inventeur: Arilla, Jean-Baptiste, 92450 Issy Les Moulineaux (FR); Galland, Alain, 77000 Melun (FR); Hacault, Michel Gerard Paul, 91300 Massy (FR); Maffre, Jean-Philippe Julien, 77820 Le Chatelet En Brie (FR)

(56) Documents cités:
- US-A- 3 989 410
- US-A- 4 466 239
- US-A- 4 822 244
- US-A- 5 245 821
- US-A- 5 402 636
- US-A- 5 575 616
- US-A- 6 017 189

## Description

### DOMAINE TECHNIQUE

Le domaine technique de la présente invention est celui des turbomachines, telles que les turboréacteurs à flux axial, comprenant un stator notamment destiné à fournir de l'air à d'autres éléments de la turbomachine. Ce stator, en particulier, est un ensemble mécanique qui permet de fournir de l'air relativement frais aux aubes de la turbine haute pression, cet air destiné notamment à refroidir une partie du rotor étant prélevé dans le fond de chambre de combustion.

### ETAT DE LA TECHNIQUE ANTERIEURE

Dans les réalisations bien connues de stator pour turbomachine de l'art antérieur, on trouve habituellement un élément tel qu'un injecteur principal qui permet d'accélérer l'air prélevé dans une cavité du stator, un flasque qui est apte à guider l'air jusqu'aux aubes de la turbine haute pression, ainsi que différents circuits d'air permettant de calibrer l'ensemble des débits d'air à travers le système. Ces débits d'air sont alors injectés dans différentes cavités permettant par conséquent de limiter les échauffements des composants mécaniques. Selon ces différents types de réalisations, il est de pratique courante d'utiliser des systèmes d'étanchéité tels que des joints à labyrinthe pour limiter au maximum les fuites d'air frais.

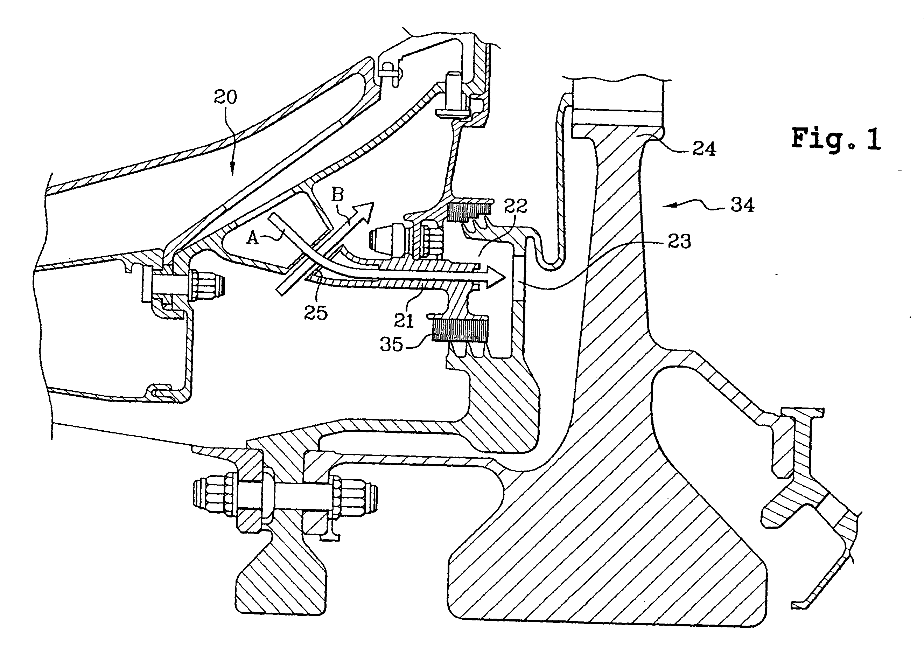

La figure 1 représente une demi-coupe longitudinale d'un stator selon l'art antérieur. Ce stator a pour fonction de prélever de l'air frais dans la cavité stator 20, puis d'acheminer cet air à travers des injecteurs 21 du type trous inclinés qui l'accélèrent et en modifient la direction d'écoulement. Cet air frais arrive alors dans une chambre sous pression 22 avant de passer dans des orifices 23 du flasque pour être dirigé vers les aubes 24 du rotor 34. Ce flux principal d'air de refroidissement est symbolisé par la flèche A de la figure 1. La flèche B symbolise quant à elle le flux d'air de fuite provenant du joint à labyrinthe interne 35, destiné à être réinjecté dans la veine principale. Toujours en référence à la figure 1, on voit que pour permettre ce flux d'air de fuite, on utilise couramment des tuyaux 25 soudés à différents éléments du stator.

Cependant, bien que les joints à labyrinthe soient couramment utilisés pour étanchéifier la chambre sous pression, comme cela est notamment décrit dans le document FR 2 744 761, ces joints à labyrinthe ne peuvent pas éviter l'ensemble des fuites d'air au travers de cette chambre. En particulier, le joint à labyrinthe interne ne peut empêcher une partie de l'air chaud se situant en dehors de la chambre sous pression de pénétrer dans celle-ci. Ceci entraîne par voie de conséquence une augmentation de la température de la chambre sous pression, donc une perte d'efficacité dans le système de refroidissement du rotor.

Un stator pour turbomachine remédiant aux inconvénients cités ci-dessus, doit mettre ainsi en oeuvre un dispositif limitant au maximum les fuites d'air chaud vers l'intérieur de la chambre sous pression.

On connait également par US-A-6017189 un stator pour turbomachine comprenant :
- des premiers moyens d'injection permettant le passage d'un flux principal d'air de refroidissement dans une chambre sous pression,
- des moyens d'évacuation d'air de fuite provenant d'un joint à labyrinthe interne, d'une première cavité vers une seconde cavité de pression inférieure,
- des seconds moyens d'injection aptes à évacuer l'air contenu dans ladite seconde cavité vers une veine principale.

Le stator est réalisé de telle sorte qu'il comprend en outre des troisièmes moyens d'injection aptes à créer une surpression d'air proche du joint à labyrinthe interne dans ladite chambre sous pression, comme le montre US-A-5 575 616.

Cette realisation a pour principal avantage de limiter au maximum les fuites d'air chaud, au niveau du joint à labyrinthe interne, en direction de la chambre sous pression. La limitation de ces fuites ralentit la hausse de température à l'intérieur de la chambre sous pression, permettant ainsi de puiser moins d'air frais depuis les premiers moyens d'injection.

De préférence, le stator est réalisé de manière à ce que les premiers moyens d'injection comprennent au moins une pale apte à produire un flux d'air tangent au rotor.

Cette configuration présente l'avantage de mettre l'air dans d'excellentes conditions, diminuant ainsi grandement les échauffements dus au passage de l'air dans les conduites. Ces échauffements sont également amoindris en raison de la nature même des premiers moyens d'injection en forme de pales ayant un profil aérodynamique adapté, ces moyens présentant alors un comportement identique à celui d'un distributeur axial classique.

Les moyens d'évacuation utilisés comprennent de préférence au moins un perçage débouchant d'une part dans la première cavité et d'autre part dans la seconde cavité.

Selon ce mode de réalisation particulier mettant en oeuvre des perçages pour permettre l'évacuation d'air de fuite, un avantage de l'invention réside dans la réduction des coûts de fabrication en utilisant une pièce existante à la place des tuyaux rajoutés de l'art antérieur. Ce stator selon l'invention participe également à l'allégement des injecteurs, ainsi qu'à l'augmentation de la durée de vie du stator du fait de l'absence des soudures des tuyaux communément pratiquées.

De façon préférentielle, les perçages mis en oeuvre pour réaliser les moyens d'évacuation d'air de fuite sont effectués dans la partie pleine des pales constituant les premiers moyens d'injection.

### EXPOSÉ DE L'INVENTION

Selon l'invention, le support d'une partie du joint à labyrinthe interne comprend les premiers moyens d'injection. Ce support présente une structure alvéolée formée alternativement de cavités et de plots de matière. Les cavités sont alors destinées à conduire aux moyens d'évacuation alors que les plots de matière comprennent les troisièmes moyens d'injection.

Avantageusement, le stator selon l'invention peut alors disposer d'un système de croisement de trois débits d'air réunis dans une seule pièce apte à être réalisée d'un seul jet en fonderie. On notera que cette configuration particulière de l'invention procure également une simplicité dans l'assemblage des différents éléments du stator.

### BRÈVE DESCRIPTION DES DESSINS

Cette description sera faite au regard des dessins annexés parmi lesquels :
- la figure 1 déjà décrite illustre l'art antérieur,
- la figure 2 représente une demi-coupe longitudinale d'une partie d'un turboréacteur dans lequel est installé le stator selon l'invention,
- la figure 3 représente une vue partielle en perspective du stator selon l'invention mettant en évidence la coopération entre les premiers moyens d'injection et les moyens d'évacuation d'air de fuite,
- la figure 4 représente une demi-coupe longitudinale d'une partie d'un turboréacteur dans lequel est installé le stator selon l'invention, lorsque ce turboréacteur utilise un flasque du type harpon.

### EXPOSÉ DÉTAILLÉ DE MODES DE RÉALISATION PARTICULIERS

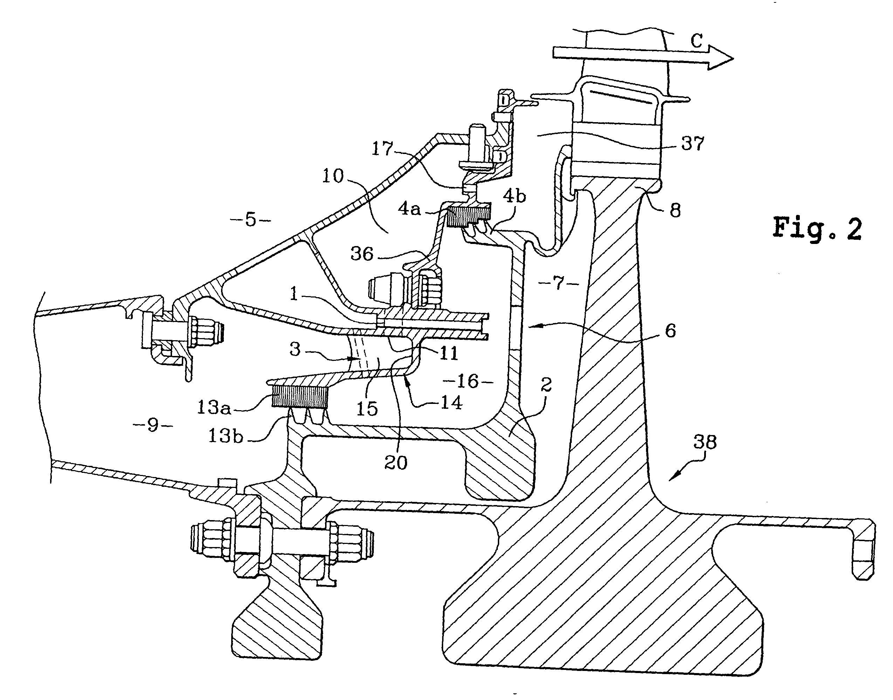

En référence à la figure 2, on voit une partie d'un turboréacteur comportant notamment un stator selon l'invention. Ce stator comprend tout d'abord une chambre sous pression 16 délimitée par différents éléments. On note parmi ces éléments, un joint à labyrinthe externe 4a,4b ainsi qu'un joint à labyrinthe interne 13a,13b. Ces deux joints à labyrinthe interne et externe 13a,13b,4a,4b sont portés respectivement par un support 14 fixé à la paroi d'une cavité stator 5 et un autre support 36 fixé à ce support 14. Le joint à labyrinthe interne 13a,13b délimite en partie une frontière entre la chambre sous pression 16 et une première cavité 9 lui étant adjacente, alors que le joint à labyrinthe externe 4a,4b délimite en partie une frontière entre la chambre sous pression 16 et une seconde cavité 10 lui étant également adjacente. Ces première et seconde cavités 9 et 10 sont elles séparées par le support 14. Il est à noter que le stator présente, en aval de la seconde cavité 10 dans la direction de l'écoulement d'une veine principale de la turbomachine représentée par la flèche C de la figure 2, une troisième cavité 37 séparée de la seconde cavité 10 par le support 36.

Les joints à labyrinthe interne 13a,13b et externe 4a,4b se décomposent généralement en au moins une pièce de friction 13a,4a fixée au stator par l'intermédiaire des supports 14 et 36 et au moins une lèvre 13b,4b fixée à un flasque 2. Ce flasque 2 délimite également la chambre sous pression 16 et est fixé à un rotor 38 de la turbomachine. Ce flasque 2 comprend des trous d'injection 6 débouchant dans une cavité 7 se situant entre ledit flasque 2 et le rotor 38 de la turbomachine, ce dernier ayant des aubes 8.

Le stator comprend tout d'abord des premiers moyens d'injection 1 réalisés dans le support 14 et permettant de puiser de l'air frais depuis la cavité stator 5, afin de l'acheminer vers les aubes 8 du rotor 38. Comme dans les dispositifs de l'art antérieur, cet air traverse les premiers moyens d'injection 1 pour venir dans la chambre sous pression 16, où un flux principal d'air de refroidissement transite avant de refroidir les aubes 8 du rotor 38 en passant par les trous d'injection 6 prévus à cet effet dans le flasque 2.

Une fois les trous d'injection 6 passés, l'air froid rempli alors la cavité 7 se trouvant entre le flasque 2 et le rotor 38. La présence de ce flasque 2 a pour but d'acheminer cet air jusqu'aux aubes 8 du rotor 38.

Toujours en référence à la figure 2, le stator comprend des moyens d'évacuation d'air de fuite provenant du joint à labyrinthe interne 13a,13b, afin d'évacuer l'air de la première cavité 9 adjacente à la chambre sous pression 16, vers la seconde cavité 10 de pression inférieure. Ces moyens d'évacuation d'air peuvent être fixés au support 14.

De plus le stator comprend des seconds moyens d'injection aptes à évacuer l'air contenu dans la seconde cavité 10 pour le réinjecter dans la troisième cavité 37 afin qu'il rejoigne la veine principale de la turbomachine. Ces seconds moyens d'injection se situent dans la partie du support 36 séparant les seconde et troisième cavités 10 et 37.

Selon l'invention, le stator comprend également des troisièmes moyens d'injection aptes à créer une surpression d'air dans la chambre sous pression 16, la surpression locale se situant proche du joint à labyrinthe interne 13a,13b. Ces moyens ont pour but d'empêcher au maximum l'air chaud de la première cavité 9 de s'échapper vers la cavité sous pression 16, afin que cette dernière reste à un niveau acceptable de température. Ces troisièmes moyens d'injection ont donc pour fonction de créer une surpression locale dans la chambre sous pression 16 proche du joint à labyrinthe interne 13a,13b, pour équilibrer les pressions entre cette chambre sous pression 16 et ladite première cavité 9 lui étant adjacente. L'air frais puisé par ces troisièmes moyens d'injection provient de la même cavité stator 5 que l'air puisé par les premiers moyens d'injection 1 pour créer le flux principal de refroidissement.

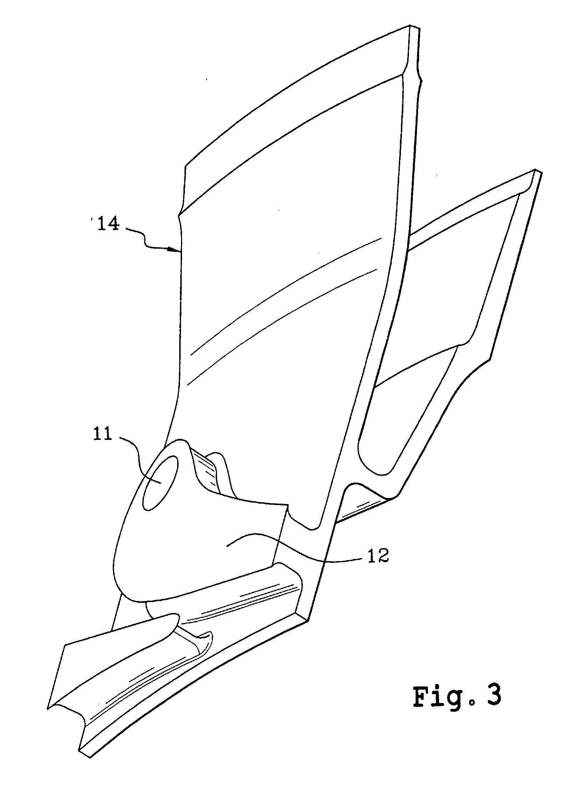

Le stator est muni de premiers moyens d'injection 1 dont la forme et la réalisation se démarquent considérablement des réalisations antérieures. En effet, en référence à la figure 3, ces moyens d'injections comprennent au moins une pale 12 permettant de rendre le flux d'air provenant de la cavité stator 5 tangent au rotor 38. Ces premiers moyens d'injection 1 sont alors assimilables à un distributeur axial classique, mettant ainsi l'air dans de meilleures conditions que s'il était amené à traverser des perçages inclinés, comme cela était couramment pratiqués auparavant. La conséquence directe de l'utilisation d'une telle disposition est la suppression d'un effet d'éclatement dû au jet sur le flasque 2, source importante d'échauffement de l'air d'alimentation des aubes. Cet effet d'éclatement est la conséquence de l'utilisation de perçages inclinés pour introduire l'air dans la chambre sous pression. L'inclinaison de ces perçages n'est en effet pas suffisante pour éviter que le flux principal d'air ne soit directement projeté contre le flasque 2. La collision entre ce flux d'air frais et le flasque 2 a pour conséquence que l'air frais de la chambre sous pression 16 chauffe inutilement et que la ventilation s'effectue alors avec moins d'efficacité. Il est à préciser que l'invention pourrait cependant utiliser des premiers moyens d'injection classiques, tels que les trous d'injection inclinés précédemment décrits.

Selon un mode de réalisation particulier de l'invention, les moyens d'évacuation d'air de fuite comprennent de préférence au moins un perçage 11 dans le support 14, ces perçages 11 débouchant d'une part dans la première cavité 9 et d'autre part dans la seconde cavité 10. Cela permet, entre autre, de diminuer le coût de fabrication en utilisant une pièce déjà existante pour réaliser ces moyens d'évacuation, au contraire des solutions visant à rapporter des tubes, puis à les souder à différents éléments du stator. De plus, l'adoption d'une telle solution technique permet d'augmenter la durée de vie du stator du fait de l'absence de la soudure des tubes. Dans le mode de réalisation décrit ci-dessus des premiers moyens d'injection 1, on peut notamment effectuer ces perçages 11 dans une partie des pales 12. Comme on peut le voir sur la figure 3, les pales 12 sont pleines et peuvent par conséquent contenir ces moyens d'évacuation d'air de fuite. La réalisation de simples perçages dans la matière de ces pales 12 permet alors de compacter l'ensemble formé par les premiers moyens d'injection 1 ainsi que les moyens d'évacuation de fuite.

En référence à la figure 2, on voit que l'ensemble de ces trois flux préalablement décrits, à savoir celui provenant des premiers moyens d'injection 1, celui provenant des troisièmes moyens d'injection ainsi que celui provenant des moyens d'évacuation d'air de fuite, peuvent cohabiter au sein de la même pièce.

Pour ce faire, il est alors possible d'adapter le support 14 pour que ce dernier soit apte à recevoir ces trois flux. Ce support 14 est en partie alvéolé, notamment grâce à la présence de cavités 20 aptes à conduire le flux d'air vers les moyens d'évacuation. Les perçages 11 de passage d'air ont leur entrée dans les cavités 20 et traversent les pales 12 comme cela a été décrit précédemment. De plus, pour obtenir la structure alvéolée, ces cavités 20 sont aménagées entre des plots de matière 15 dans lesquels sont réalisés les troisièmes moyens d'injection.

Le support 14 comprenant par ailleurs les premiers moyens d'injection 1, on est alors en présence d'un stator triple flux, ces flux se croisant dans le support 14 sans qu'aucun d'entre eux ne vienne perturber le bon écoulement des autres. Cette partie du stator est facilement réalisable en fonderie d'un seul jet. De plus, l'utilisation de la technologie de fonderie permet d'adapter les formes et d'épouser le mieux possible le rotor 28, donnant à ce dernier un aspect plus compact qu'auparavant. Cette réduction de l'encombrement des pièces du rotor 38 entraîne également de substantielles réductions de coût de production en raison de la limitation dans la taille de ces pièces constituant le rotor 38.

Les troisièmes moyens d'injection peuvent prendre la forme d'au moins un perçage 3 à travers les plots de matière 15. Ces perçages sont préférablement positionnés de façon inclinée pour obtenir un flux d'air ayant une forte composante tangente au rotor 38, à savoir selon une direction perpendiculaire au plan de coupe de la figure 2. Il est également possible que ces troisièmes moyens d'injection se matérialisent sous la forme d'au moins une pale apte à rendre le flux d'air tangent à ce rotor 38. Ces pales seraient alors du même type que celles des premiers moyens d'injection représentées sur la figure 3.

Pour évacuer l'air de la seconde cavité 10 vers la veine principale, on dispose des seconds moyens d'injection. Comme cela est le cas dans la pratique, on peut effectuer au moins un perçage 17 incliné dans le stator de façon à obtenir un flux d'air ayant une forte composante tangente au rotor. Ces perçages 17 peuvent être réalisés dans le support 36 entre la seconde cavité 10 et la troisième cavité 37. Notons que l'on peut également avoir recours à un système de pales ayant les effets thermiques et mécaniques déjà décrits. De plus, l'air provenant de ces seconds moyens d'injection peut aussi être utilisé pour refroidir une zone du rotor soumise aux fortes chaleurs de l'écoulement de la veine principale.

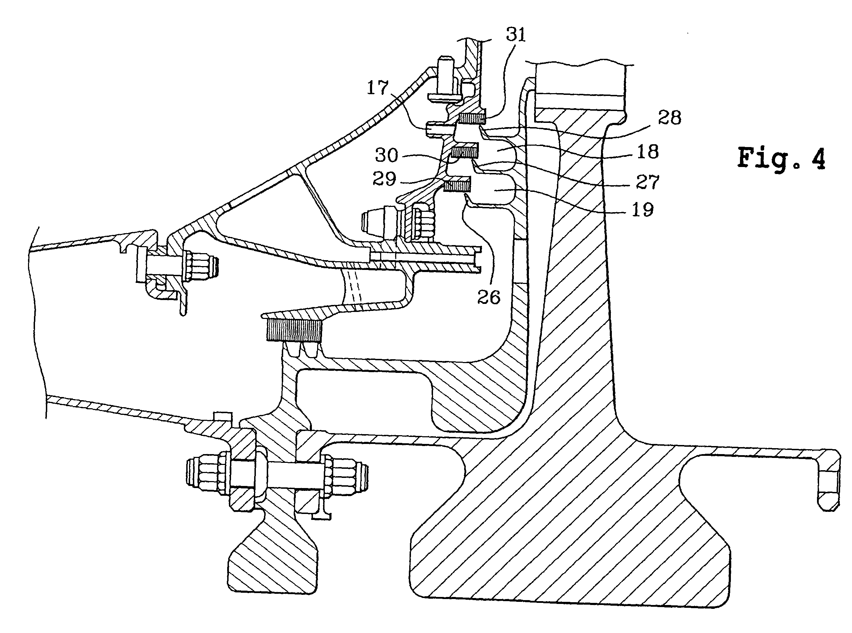

De même, les seconds moyens d'injection peuvent également améliorer l'efficacité des systèmes d'étanchéité rotatifs du flasque 2. En référence à la figure 4, les perçages 17 débouchent dans une cavité 18 du joint à labyrinthe externe. Ce cas de figure se présente lorsqu'on utilise un flasque 2 du type harpon, c'est-à-dire lorsque le joint à labyrinthe externe est réalisé de telle sorte que chaque lèvre 26,27,28 coopère avec une pièce de friction distincte 29,30,31 du type nid d'abeille. On obtient donc en raison de cet agencement particulier, au moins deux cavités 18,19 partiellement séparées de la seconde cavité 10 par un élément autre qu'une des pièces de friction 29,30,31 du type nid d'abeille.

On peut alors injecter l'air dans l'une de ces cavités 18,19 par l'intermédiaire des seconds moyens d'injection. Cet air arrivant dans les cavités 18,19 tourbouillonne et est entraîné en rotation avant d'être naturellement aspiré de la chambre sous pression 16 vers la veine principale, en raison de la différence de pression entre ces éléments. Le fait d'injecter de l'air chaud dans l'une des cavités 18 ou 19 va permettre ainsi une économie de l'air froid à prélever des premiers moyens d'injection 1 et entraîne par conséquent une amélioration des performances du système. Notons également que le fait d'injecter de l'air dans la petite cavité 18 créée par la succession de deux labyrinthes fait augmenter la pression de cette petite cavité et provoque donc une baisse supplémentaire de la différence de pression entre cette cavité 18 et la chambre sous pression 16.

La principale amélioration apportée ici réside dans l'utilisation d'un joint à labyrinthe externe du type harpon. En effet, cet agencement permet de réaliser les seconds moyens d'injection dans un élément plein, autre qu'un élément de friction du type nid d'abeille, perturbateur du jet d'air. La solution s'avère alors très avantageuse dans le sens où elle évite les perturbations résultant du passage à travers les structures en nid d'abeille 29,30,31, et dans le sens où elle comporte moins de contraintes de fabrication que dans les solutions existantes de l'art antérieur.

Les seconds moyens d'injection prennent alors la forme de perçages inclinés 17 pour obtenir un flux d'air ayant une forte composante tangente au rotor 38, ou encore la forme de pales comme celles pouvant être utilisées pour réaliser les premiers moyens d'injection 1. La surpression créée dans la petite cavité 18 fait diminuer considérablement les débits de fuite du circuit de refroidissement, la conséquence étant que davantage d'air froid provenant des premiers moyens d'injection parvient à passer au travers des orifices de passage 6.

Une autre particularité de l'invention provient de l'agencement spécifique du support 14 et des premiers moyens d'injection 1. Traditionnellement, la partie du support 14 portant la pièce de friction 13a du joint à labyrinthe interne 13a,13b est placée sous la sortie d'air des premiers moyens d'injection 1. Dans cette configuration, cette partie du support 14 est alors soumise à de faibles déplacements provoqués par ces premiers moyens d'injection 1, créant ainsi des fuites importantes à travers le joint à labyrinthe interne 13a,13b. Pour palier à cet inconvénient, le stator peut alors présenter comme ceci est visible sur la figure 2, un décalage entre la sortie des premiers moyens d'injection 1 et la partie du support 14 portant la pièce de friction 13a. Ce décalage permet d'interposer entre ces deux éléments les troisièmes moyens d'injection, qui sont également une source de faibles déplacements pour le support 14 portant la pièce de friction 13a. On a ainsi la possibilité de maîtriser le jeu dans le joint à labyrinthe interne 13a,13b, en découplant les deux mouvements du stator énumérés ci-dessus. En effet, en ajustant la masse des plots 15, les débits d'air dans les perçages 3 et le nombre de ces perçages, on peut ainsi ajuster la position relative du rotor et du stator afin de limiter au maximum le éventuelles fuites à travers ce joint à labyrinthe interne 13a,13b.

Il en est de même pour le joint à labyrinthe externe 4a,4b. On a en effet la possibilité de maîtriser les faibles déplacements du support 36 portant la pièce de friction 4a, en combinant les effets de la masse d'inertie de ce support 36 et les effets du refroidissement créé par les perçages inclinés 17 des seconds moyens d'injection.

Les troisièmes moyens d'injection permettent également d'obtenir un débit d'appoint pour le circuit d'air de refroidissement des aubes, ainsi qu'une stabilisation de la pression de la chambre sous pression 16.

Notons enfin que le support 36 de la pièce de friction 4a est boulonné par l'intérieur, contrairement à ce qui se pratique habituellement, cette technique permettant d'avoir un gain de place dans la partie externe pour aménager l'appui du distributeur.

Bien entendu, diverses modifications peuvent être apportées par l'homme de l'art au dispositif qui vient d'être décrit, uniquement à titre d'exemple non limitatif.

## Revendications

1. Stator pour turbomachine comprenant :
- un support (14),
- des premiers moyens d'injection (1) permettant le passage d'un flux principal d'air de refroidissement dans une chambre sous pression (16),
- des moyens d'évacuation d'air de fuite provenant d'un joint à labyrinthe interne (13) délimitant en partie la chambre sous pression (16), d'une première cavité (9) vers une seconde cavité (10) de pression inférieure,
- des seconds moyens d'injection aptes à évacuer l'air contenu dans ladite seconde cavité (10) vers une veine principale,
ce stator comprenant en outre des troisièmes moyens d'injection aptes à créer une surpression d'air proche du joint à labyrinthe interne (13a,13b) dans ladite chambre sous pression (16), **caractérisé en ce que** le joint à labyrinthe interne (13a,13b) comprend au moins une pièce de friction (13a), chaque pièce de friction (13a) étant portée par le support (14) dans lequel se situent les premiers moyens d'injection, ce support (14) étant alvéolé par l'intermédiaire de cavités (20) et de plots de matière (15), ces cavités (20) étant destinées à conduire aux moyens d'évacuation d'air de fuite et les plots de matière (15) étant destinés à comprendre les troisièmes moyens d'injection.

2. Stator pour turbomachine selon la revendication 1, **caractérisé en ce que** les troisièmes moyens d'injection comprennent au moins une pale (12) apte à produire un flux d'air tangent au rotor (38) de la turbomachine.

3. Stator pour turbomachine selon la revendication 1, **caractérisé en ce que** les troisièmes moyens d'injection comprennent au moins un perçage (3) réalisé à travers lesdits plots de matière (15).

4. Stator pour turbomachine selon la revendication 3, **caractérisé en ce que** les perçages (3) sont réalisés de façon inclinée de manière à produire un flux d'air ayant une forte composante tangente au rotor (38) de la turbomachine.

5. Stator pour turbomachine selon l'une quelconque des revendications précédentes, **caractérisé en ce que** la chambre de pression (16) est notamment délimitée par un joint à labyrinthe externe (4a,4b) de type harpon, formant au moins deux cavités (18,19), chacune de ces cavités (18,19) étant séparée en partie de ladite seconde cavité (10) par un élément plein, lesdits seconds moyens d'injection débouchant dans au moins l'une de ces cavités (18,19) étant réalisés dans ledit élément plein.

## Patentansprüche

1. Stator für eine Turbomaschine,
- mit einem Träger (14),
- mit ersten Einspritzmittetn (1), die den Durchgang einer Hauptkühlluftströmung in eine Druckkammer (16) ermöglichen,
- mit Austragmitteln zum Austragen von aus einer die Druckkammer (16) tellweise begrenzenden inneren Labyrintdichtung (13) kommender Leckluft aus einem ersten Hohlraum (9) zu einem zweiten Hohlraum (10) mit niedrigerem Druck,
- mit zweiten Einspritzmitteln zum Austragen der in dem zweiten Hohlraum (10) enthaltenen Luft in einen Hauptstrom,
wobei der Stator außerdem dritte Einspritzmittel aufweist zur Erzeugung eines Luftüberdrucks in der Nähe der inneren Labyrintdichtung (13a, 13b) in der genannten Druckkammer (16),
**dadurch gekennzeichnet,**
**daß** die innere Labyrintdichtung (13a, 13b) wenigstens ein Reibungsteil (13a) aufweist,
wobei jedes Reibungsteil (13a) von dem Träger (14) getragen wird , in dem sich die ersten Einspritzmittel befinden, und wobei dieser Träger (14) durch Hohlräume (20) und durch Werkstoffteile (15), zellenförmig ausgebildet ist, wobei diese Hohlräume (20) dazu bestimmt sind, Leckluft zu den genannten Austragmitteln zu leiten, und die Werkstoffteile (15) dazu bestimmt sind, die dritten Einspritzmittel aufzunehmen.

2. Stator für eine Turbomaschine nach Anspruch 1, **dadurch gekennzeichnet, daß** die dritten Einspritzmittel wenigstens ein Blatt (12) zur Erzeugung einer den Rotor (38) der Turbomaschine tangierenden Luftströmung umfassen.

3. Stator für eine Turbomaschine nach Anspruch 1, **dadurch gekennzeichnet, daß** die dritten Einspritzmittel wenigstens eine Bohrung (3) umfassen, die durch die genannten Werkstoffteile (15) ausgeführt ist.

4. Stator für eine Turbomaschine nach Anspruch 3, **dadurch gekennzeichnet, daß** die Bohrungen (3) mit einer Neigung ausgeführt sind, so daß sie eine Luftströmung erzeugen, die eine starke, zum Rotor (38) der Turbomaschine tangentiale Komponente aufweist.

5. Stator für eine Turbomaschine nach einem der vorhergehenden Ansprüche, **dadurch gekennzeichnet, daß** die Druckkammer (16) insbesondere von einer äußeren Labyrintdichtung vom Klammertyp begrenzt wird, die wenigstens zwei Hohlräume (18, 19) bildet, wobei diese Hohlräume (18, 19) von dem zweiten Hohlraum (10) teilweise durch ein volles Element getrennt ist, und wobei die zweiten Einspritzmittel in wenigstens einem dieser Hohlräume (18, 19) münden, die in dem genannten vollen Element ausgebildet sind.

## Claims

1. Stator for a turbomachine comprising:
- a support (14),
- first injection means (1) allowing the passage of a main flow of cooling air into a pressurized chamber (16),
- means for discharging leakage air coming from an internal labyrinth seal (13), partly delimiting the pressurized chamber (16), of a first cavity (9) towards a lower-pressure second cavity (10),
- second injection means capable of discharging the air contained in the said second cavity (10) towards a main stream,
this stator additionally comprising third injection means capable of creating air overpressure close to the internal labyrinth seal (13a, 13b) in the said pressurized chamber (16), **characterized in that** the internal labyrinth seal (13a, 13b) comprises at least one friction part (13a), each friction part (13a) being borne by the support (14) in which the first infection means are situated, this support (14) being divided into cells formed by way of cavities (20) and blocks of material (15), these cavities (20) being intended to lead to the leakage-air discharge means and the blocks of material (15) being intended to comprise the third injection means.

2. Stator for a turbomachine according to Claim 1, **characterized in that** the third injection means comprise at least one vane (12) capable of producing an air flow tangential to the rotor (38) of the turbomachine.

3. Stator for a turbomachine according to Claim 1, **characterized in that** the third injection means comprise at least one bore (3) made through the said blocks of material (15).

4. Stator for a turbomachine according to Claim 3, **characterized in that** the bores (3) are made to be inclined so as to produce an air flow having a strong component tangential to the rotor (38) of the turbomachine.

5. Stator for a turbomachine according to any one of the preceding claims, **characterized in that** the pressure chamber (16) is delimited in particular by an external labyrinth seal (4a, 4b) of harpoon type, forming at least two cavities (18, 19), each of these cavities (18, 19) being partly separated from the said second cavity (10) by a solid element, the said second injection means which open into at least one of these cavities (18, 19) being produced in the said solid element.
